# EUROPÄISCHE PATENTSCHRIFT

(11) **EP 1 595 482 B1**
(45) Veröffentlichungstag und Bekanntmachung des Hinweises auf die Patenterteilung: **03.12.2008**
(21) Anmeldenummer: 05008879.8
(22) Anmeldetag: 22.04.2005
(51) Int. Cl.: A47J 37/07

(54) **Grill**
Grill
Grill

(30) Priorität: 11.05.2004 DE 202004007745 U
(43) Veröffentlichungstag der Anmeldung: 16.11.2005
(73) Patentinhaber: Schneider, Frank, 66620 Nonnweiler (DE); Weber, Peter, 66620 Nonnweiler (DE)
(72) Erfinder: Schneider, Frank, 66620 Nonnweiler (DE); Weber, Peter, 66620 Nonnweiler (DE)
(74) Vertreter: Serwe, Karl-Heinz

(56) Entgegenhaltungen:
- DE-A1- 2 546 559
- US-B1- 6 598 598

## Beschreibung

Die Erfindung betrifft einen Grill mit einer Feuerstelle für Holzkohle, Kohle, Holz, Briketts oder einem anderen geeigneten Festbrennstoff und mit einem im Abstand über der Feuerstelle angeordneten Grillrost mit Grillstäben zur Lagerung des Grillgutes.

Bei Grills ist es wünschenswert, dass die Grillleistung durch Luftzufuhr zur Feuerstelle vergrößert werden kann.

Aus der Deutschen Patentschrift DE 199 26 945 C2 und aus dem Deutschen Gebrauchsmuster 299 15 228 U1 sind kastenartige Feuerstellen bekannt, die einen Lufteinlass und Luftdurchtrittsöffnungen an ihrer Oberseite haben. Nachteilig ist, dass bei diesen Feuerstellen die eingeblasene Luft zur Verwirbelung der Asche des auf der Feuerstelle lagernden Brenngutes führt, sodass die Gefahr besteht, dass das Grillgut durch Ascheteilchen verschmutzt wird.

Aus der Deutschen Offenlegungsschrift 25 46 559 ist ein Holzkohlengrill bekannt, der an seinem Außenumfang umlaufend angeordnete Luftaustrittsöffnungen hat. Diese Luftaustrittsöffnungen erreichen jedoch nur den Außenbereich des auf der Feuerstelle gelagerten Brenngutes, sodass die Heizleistung nur geringfügig verändert werden kann.

Die Aufgabe der Erfindung besteht darin, einen Grill der eingangs genannten Art vorzuschlagen, dessen Heizleistung wirkungsvoll ohne die Gefahr der Verschmutzung des Grillgutes durch Asche einfach veränderbar ist.

Diese Aufgabe wird dadurch gelöst, dass die Grillstäbe innen hohl ausgebildet sind und an ihrer Unterseite nach unten zur Feuerstelle hin gerichtete Luftauslassöffnungen haben und dass ein Ende der Grillstäbe mit dem Luftauslass eines Gebläses verbunden ist.

Vorteilhaft ist das andere Ende der Grillstäbe geschlossen.

Vorzugsweise ist das offene Ende der Grillstäbe mit einem als Luftlade ausgebildeten Rahmenabschnitt des Grillrostes verbunden.

Vorzugsweise ist ein innen hohles Standbein des Grills mit der Luftlade und mit dem Luftauslass des Gebläses verbunden.

Vorzugsweise sind mehrere innen hohle Standbeine und/oder mehrere Luftladen und/oder mehrere Luftauslässe und/oder mehrere Gebläse vorgesehen.

Bei einer vorteilhaften Ausführungsform sind die Grillstäbe herausnehmbar im Grillrost angeordnet.

Vorzugsweise verläuft der Endabschnitt der Grillstäbe mit dem geschlossen Ende in Richtung der Luftauslassöffnungen nach unten und ist in Öffnungen des Grillrostes einrastbar. Vorzugsweise sind die Endabschnitte von einer mit dem Grillrost lösbar verbundenen Halteschiene in den Öffnungen gehalten.

Bei einer weiteren vorteilhaften Ausführungsform sind die Grillstäbe entgegen der Kraft einer vorgespannten Feder in Längsrichtung verschiebbar im Grillrost angeordnet und somit aus dem Grillrost herausnehmbar. Vorzugsweise haben die Grillstäbe eine Nase, mit der sie in zugeordnete Ausnehmungen des Grillrostes einsetzbar sind.

Die Erfindung ist in den Zeichnungen beispielhaft dargestellt.
Es zeigen:

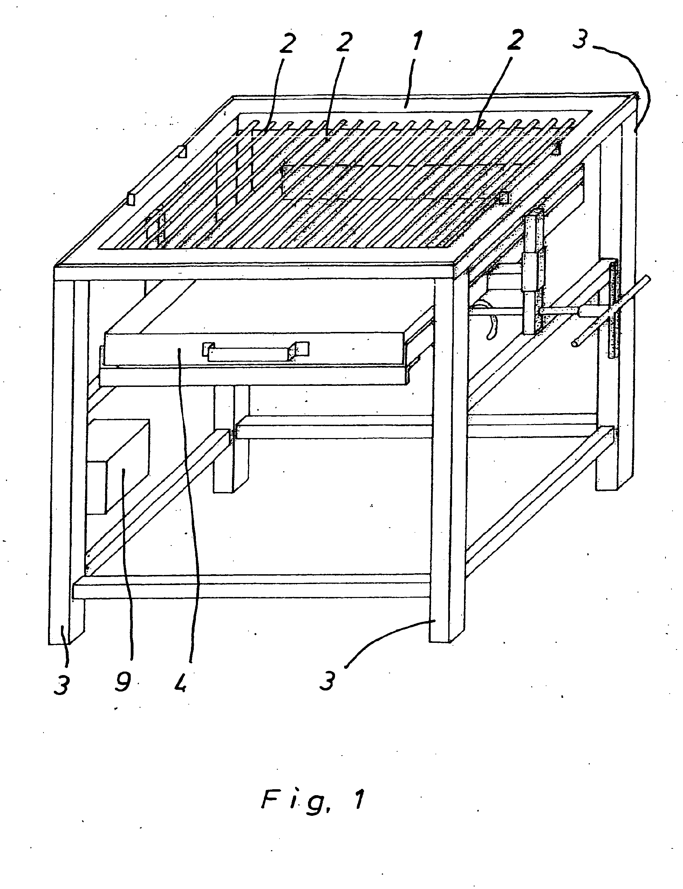

- Fig. 1: einen Grill in perspektivischer Ansicht,
- Fig. 2: den Grill im Schnitt,
- Fig. 3 und Fig. 4: andere Ausführungsformen des Grills im Schnitt und
- Fig. 5: den Grill mit einem Lüfterrad im Schnitt.

Nach den Figuren hat ein Grill einen Grillrost 1 mit Grillstäben 2, der von Standbeinen 3 getragen wird.

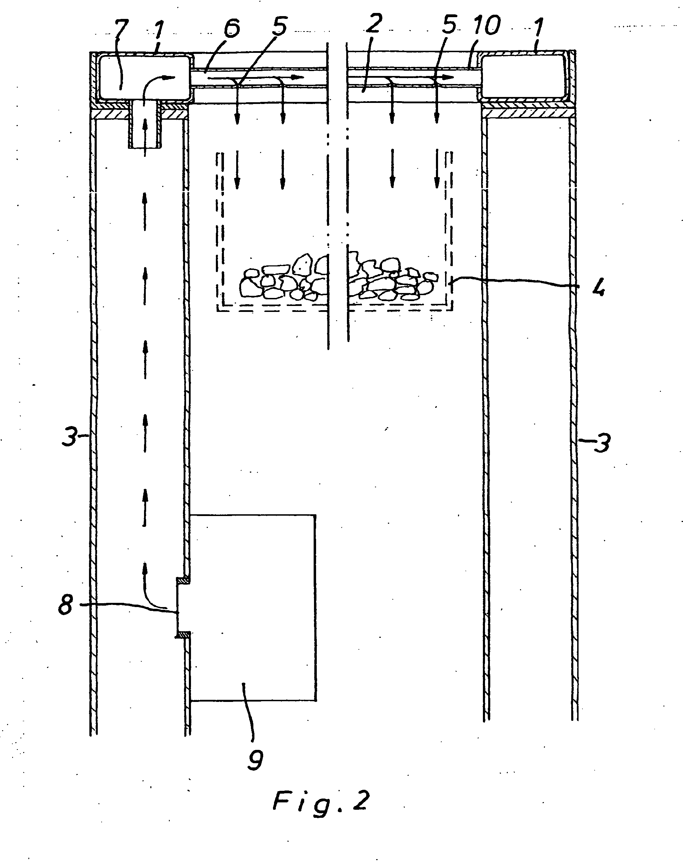

Unter dem Grillrost 1 ist eine Feuerstelle 4 herausnehmbar angeordnet. Wie die Figuren 2 bis 4 zeigen, lagert auf der Feuerstelle 4 ein Festbrennstoff.

Die Figuren 2 bis 4 zeigen weiterhin, dass die Grillstäbe 2 innen hohl sind und nach unten zur Feuerstelle 3 hin gerichtete Luftauslassöffnungen 5 haben. Die Pfeile in den Figuren zeigen die Luftströmungen an.

Wie die Figuren 2 bis 5 weiter zeigen, stehen die einen Enden 6 der Grillstäbe 2 mit einem als Luftlade 7 ausgebildeten Abschnitt des Grillrostes 1 in Verbindung. Die Luftlade 7 ist durch ein innen hohles Standbein 3 mit dem Luftauslass 8 eines Gebläses 9 verbunden.

Wird das Gebläse 9 in Tätigkeit gesetzt, so gelangt Luft aus dem Gebläse über den Luftauslass 8, das innere hohle Standbein 3 und die Luftlade 7 in die Grillstäbe 2 und tritt durch die nach unten gerichteten Luftauslassöffnungen 5 der Grillstäbe in Richtung auf die Feuerstelle 4 aus. Durch entsprechende Regelung des Gebläses 9 kann somit die Grillleistung des Grills erhöht werden, ohne dass es zur Verwirbelung von Asche od.dgl. kommt.

Die Grillstäbe 2 sind an ihrem anderen Ende 10 geschlossen.

Bei der Ausführungsform des Grills nach Fig. 2 sind die Grillstäbe 2 fest im Grillrost 1 angeordnet.

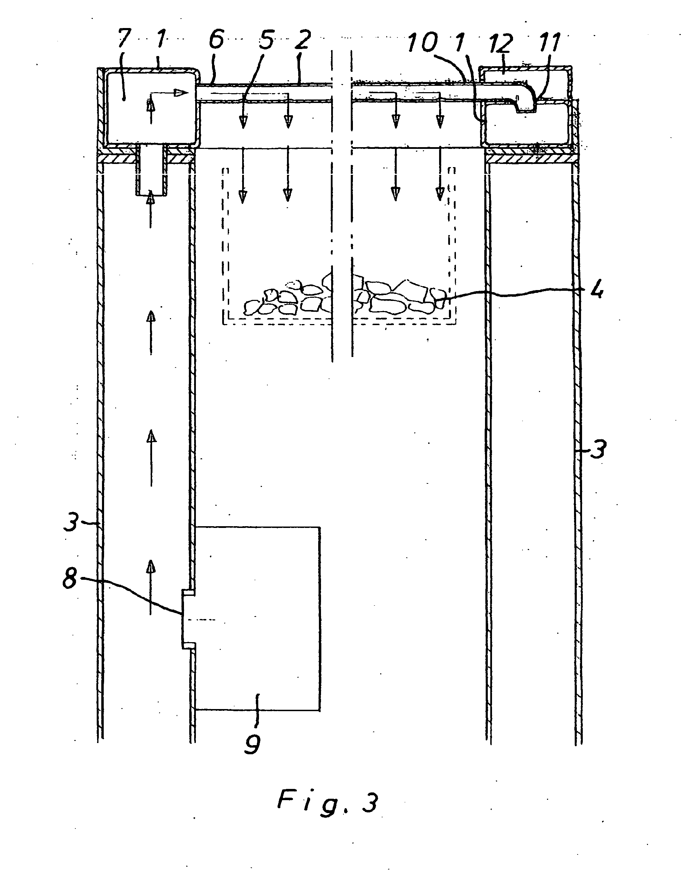

Bei der Ausführungsform des Grills nach Fig. 3 sind die Endabschnitte 11 der Grillstäbe 2 mit den geschlossenen Enden in Richtung der Luftauslassöffnungen 5 nach unten verlaufend ausgebildet und sind in Öffnungen des Grillrostes 1 eingesetzt. Eine lösbar mit dem Grillrost 1 verbundene Halteschiene 12 sichert die Grillstäbe 2. Nach Lösen der Halteschiene 12 können die Endabschnitte 11 der Grillstäbe aus den Öffnungen des Grillrostes 1 herausgehoben werden und die anderen Enden 6 der Grillstäbe aus der Luftlade 7 herausgezogen werden.

Auf diese Weise sind die Grillstäbe 2 leicht zu reinigen. Der nach unten verlaufende Endabschnitt 11 der Grillstäbe 2 gewährleistet, dass beim Wiedereinsetzen der Grillstäbe die Luftauslassöffnungen 5 in der richtigen Richtung verlaufen.

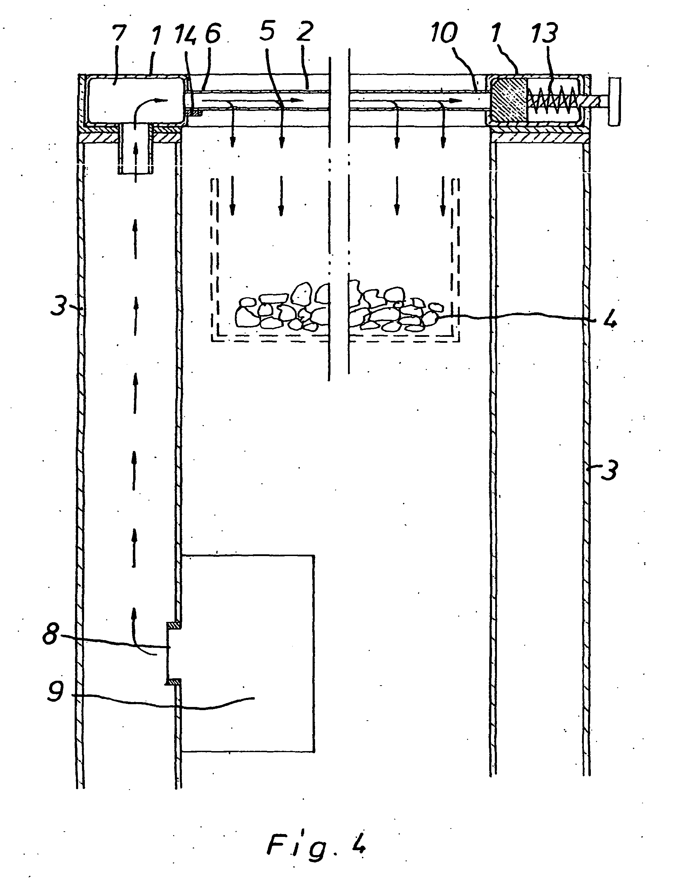

Bei der Ausführungsform des Grills nach Fig. 4 sind die Grillstäbe 2 entgegen der Kraft einer vorgespannten Feder 13 in ihrer Längsrichtung verschiebbar, sodass das Ende 6 aus der Luftlade 7 herausgenommen werden kann und anschließend der Grillstab aus dem Feuerrost 1 herausgezogen werden kann. Eine Nase 14, die in eine zugeordnete Ausnehmung des Grillrostes 1 eingreift, sichert, dass die Grillstäbe 2 derart in den Grillrost 1 wieder eingesetzt werden, dass die Luftauslassöffnungen 5 zur Feuerstelle 4 hingerichtet sind.

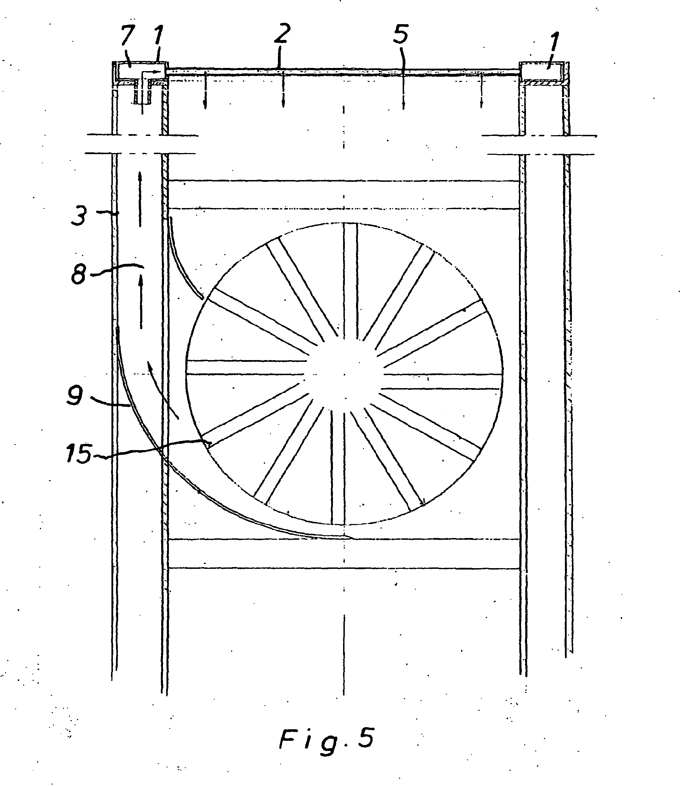

Die Fig. 5 zeigt die Anordnung eines Lüfterrades 15 unterhalb der Feuerstelle 4.

Das Gebläse 9 kann entweder elektrisch oder mit Muskelkraft angetrieben werden. Es ist auch möglich, das Gebläse 9 mit Solarzellen zu betreiben.

Der erfindungsgemäße Grill erreicht durch die Zufuhr von zusätzlicher Luft in kürzester Zeit die erforderliche Grillglut, wobei durch den großflächig zur Feuerstelle 4 hingerichteten Luftstrom durch die Luftauslassöffnungen 5 der Grillstäbe 2 ein Ascheflug vermieden wird.

Durch Abnehmen des Grillrostes 1 kann der Grill auch als Feuerstelle 4 genutzt werden. Weiterhin ist es möglich, nach Abnahme des Grillrostes 1 einen Grillaufsatz für Spießbraten, Rollbraten od.dgl. mehr einzusetzen.

## Patentansprüche

1. Grill mit einer Feuerstelle (4) für Holzkohle, Kohle, Holz, Briketts oder einem anderen geeigneten Festbrennstoff und mit einem im Abstand über der Feuerstelle angeordneten Grillrost (1) mit Grillstäben (2) zur Lagerung des Grillgutes, **dadurch gekennzeichnet, dass** die Grillstäbe (2) innen hohl ausgebildet sind und an ihrer Unterseite nach unten zur Feuerstelle (4) hin gerichtete Luftauslassöffnungen (5) haben und dass ein Ende der Grillstäbe mit dem Luftauslass (8) eines Gebläses (9) verbunden ist.

2. Grill nach Anspruch 1, **dadurch gekennzeichnet, dass** das andere Ende (10) der Grillstäbe (2) geschlossen ist.

3. Grill nach Anspruch 1 oder 2, **dadurch gekennzeichnet, dass** das offene Ende (6) der Grillstäbe (2) mit einem als Luftlade (7) ausgebildeten Rahmenabschnitt des Grillrostes (1) verbunden ist.

4. Grill nach einem der Ansprüche 1 bis 3, **dadurch gekennzeichnet, dass** ein innen hohles Standbein (3) des Grills mit der Luftlade (7) und dem Luftauslass (8) des Gebläses (9) verbunden ist.

5. Grill nach Anspruch 4, **dadurch gekennzeichnet, dass** mehrere innen hohle Standbeine (3) und/oder mehrere Luftladen (7) und/oder mehrere Luftauslässe (8) und/oder mehrere Gebläse (9) vorgesehen sind.

6. Grill nach einem der Ansprüche 1 bis 5, **dadurch gekennzeichnet, dass** die Grillstäbe (2) herausnehmbar im Grillrost (1) angeordnet sind.

7. Grill nach Anspruch 6, **dadurch gekennzeichnet, dass** der Endabschnitt (11) der Grillstäbe (2) mit dem geschlossenen Ende in Richtung der Luftauslassöffnungen (5) nach unten verläuft und in Öffnungen des Grillrostes (1) einsetzbar ist.

8. Grill nach Anspruch 7, **dadurch gekennzeichnet, dass** die Endabschnitte (11) von einer mit dem Grillrost (1) lösbar verbundenen Halteschiene (12) in den Öffnungen gehalten sind.

9. Grill nach Anspruch 6, **dadurch gekennzeichnet, dass** die Grillstäbe (2) entgegen der Kraft einer vorgespannten Feder (13) in Längsrichtung verschiebbar im Grillrost (1) angeordnet und somit aus dem Grillrost herausnehmbar sind.

10. Grill nach Anspruch 9, **dadurch gekennzeichnet, dass** die Grillstäbe (2) eine Nase (14) haben, mit der sie in zugeordnete Ausnehmungen des Grillrostes (1) einsetzbar sind.

## Claims

1. A grill with a firebox (4) for charcoal, coal, wood, briquettes or other suitable solid fuel and with a rack (1) comprising grill bars (2) disposed at a distance above the firebox for supporting the food to be grilled, **characterized in that** the grill bars (2) are made so as to be hollow inside and have air outlet openings (5) on their underside which are directed downwards towards the firebox (4) and **in that** one end of each grill bar is connected to the air outlet (8) of a fan (9).

2. A grill according to Claim 1, **characterized in that** the other ends (10) of the grill bars (2) are closed.

3. A grill according to Claim 1 or 2, **characterized in that** the open ends (6) of the grill bars (2) are connected to a portion of the frame of the rack (1) taking the form of an air chamber (7).

4. A grill according to one of Claims 1 to 3, **characterized in that** a hollow supporting leg (3) of the grill is connected to the air chamber (7) and to the air outlet (8) of the fan (9).

5. A grill according to Claim 4, **characterized in that** a plurality of hollow supporting legs (3) and/or a plurality of air chambers (7) and/or a plurality of air outlets (8) and/or a plurality of fans (9) are provided.

6. A grill according to one of Claims 1 to 5, **characterized in that** the grill bars (2) are placed in the rack (1) in such a way as to be removable.

7. A grill according to Claim 6, **characterized in that** the end portions (11) of the grill bars (2) with the closed ends extend downwards in direction of the air outlet openings (5) and can be inserted into openings in the rack (1).

8. A grill according to Claim 7, **characterized in that** the end portions (11) of a support bar (12) detachably connected to the rack (1) are retained in the openings.

9. A grill according to Claim 6, **characterized in that** the grill bars (2) are placed in the rack (1) by sliding them in longitudinal direction against the force of a preloaded spring (13) and thus can be removed from the rack.

10. A grill according to Claim 9, **characterized in that** the grill bars (2) each have a lug (14), by means of which they can be inserted into corresponding recesses in the rack (1).

## Revendications

1. Barbecue comprenant un foyer (4) pour charbon de bois, charbon, bois, briquettes ou un autre combustible solide approprié ainsi qu'une grille (1) disposée à distance au-dessus du foyer et comportant des barres (2) destinées à supporter l'aliment à faire griller, **caractérisé en ce que** les barres (2) présentent une conformation intérieure creuse et possèdent du côté inférieur des ouvertures de passage d'air (5) qui sont dirigées vers le bas en direction du foyer et **en ce qu'**une extrémité des barres est reliée à la sortie d'air (8) d'un ventilateur (9).

2. Barbecue selon la revendication 1, **caractérisé en ce que** l'autre extrémité (10) des barres (2) est fermée.

3. Barbecue selon la revendication 1 ou 2, **caractérisé en ce que** l'extrémité ouverte (6) des barres (2) est reliée à une portion formant cadre, conformée en entrée d'air (7), de la grille (1).

4. Barbecue selon l'une des revendications 1 à 3, **caractérisé en ce qu'**un pied (3), creux à l'intérieur, du barbecue est relié à l'entrée d'air (7) et à la sortie d'air (8) du ventilateur (9).

5. Barbecue selon la revendication 4, **caractérisé en ce qu'**il est prévu plusieurs pieds (3), creux à l'intérieur, et/ou plusieurs entrées d'air (7) et/ou plusieurs sorties d'air (8) et/ou plusieurs ventilateurs (9).

6. Barbecue selon l'une des revendications 1 à 5, **caractérisé en ce que** les barres (2) sont disposées de façon extractible dans la grille (1).

7. Barbecue selon la revendication 6, **caractérisé en ce que** la portion d'extrémité (11) des barres qui comporte l'extrémité fermée s'étend vers le bas en direction des ouvertures de sortie d'air (5) et peut être insérée dans des ouvertures de la grille (1).

8. Barbecue selon la revendication 7, **caractérisé en ce que** les portions d'extrémité (11) sont maintenues dans les ouvertures par une glissière de retenue (12) qui est reliée de façon amovible à la grille (1).

9. Barbecue selon la revendication 6, **caractérisé en ce que** les barres (2) sont disposées dans la grille (1) de façon à pouvoir être déplacées dans une direction longitudinale en s'opposant à la force exercée par un ressort précontraint (13) et peuvent ainsi être retirées de la grille.

10. Barbecue selon la revendication 9, **caractérisé en ce que** les barres (2) comportent un ergot (14) permettant de les insérer dans un évidement associé de la grille (1).
